# EUROPEAN PATENT SPECIFICATION

(11) **EP 3 822 044 B1**
(45) Date of publication and mention of the grant of the patent: **10.01.2024**
(21) Application number: 20207977.8
(22) Date of filing: 17.11.2020
(51) Int. Cl.: B25J 9/00

(54) **EXOSKELETON JOINT DRIVE WITH NON-LINEAR TRANSMISSION**
EXOSKELETT-GELENKANTRIEB MIT NICHTLINEARER ÜBERSETZUNG
JOINT DRIVE EXOSKELETIC AVEC TRANSMISSION NON LINÉAIRE

(30) Priority: 17.11.2019 DE 102019131005
(43) Date of publication of application: 19.05.2021
(73) Proprietor: exoIQ GmbH, 21109 Hamburg (DE)
(72) Inventor: Weidner, Robert, 29581 Gerdau (DE); Otten, Bernward, 20535 Hamburg (DE)
(74) Representative: Koplin, Moritz

(56) References cited:
- EP-A1- 1 260 201
- US-A1- 2017 246 740
- US-A1- 2018 116 828

## Description

### FIELD

The present disclosure relates to an exoskeleton. In particular, the present disclosure relates to an exoskeleton with a joint drive.

### BACKGROUND

When using an exoskeleton, the level of assistance that is to be provided by the exoskeleton usually depends on the activity and may differ significantly between different poses and movements.

For example, US 2018/116828 A1 discloses an exoskeleton according to the preamble of appended claim 1, comprising a joint assembly for use in a modular lower limb. The joint assembly includes a reconfigurable slider-crank mechanism that is configurable to provide a plurality of different ranges of rotational travel, rotational speeds, and torques, for customization according to different anatomical joints. Further exoskeletons according to the preamble of appended claim 1 for use in a modular lower limb are known from US 2017/246740 A1 and EP 1260201 A1.

### SUMMARY

An exoskeleton according to the invention is defined in appended claim 1 and comprises a first link and a second link connected by a first rotary joint, and a joint drive with a first element and a second element. The first link is an upper arm link and the second link is a shoulder link. The first link is an elongated rigid body and the second link is an angled rigid body. The first element is connected to the first link by a second rotary joint. The second element is connected to the second link by a linear joint. The second element is connected to the first element by a third rotary joint.

The term "link", as used in the context of the present description and the claims, may refer to a rigid body which forms part of the kinematic chain defining the exoskeleton. Furthermore, the term "element", as used in the context of the present description and the claims, may refer to a rigid component that is configured to transmit a force applied to the component onto another component. Moreover, the term "rotary joint", as used in the context of the present description and the claims, may refer to an arrangement in which two links/elements are connected to one another such that they can be rotated relative to one another about a common axis of rotation.

Furthermore, the term "joint drive", as used in the context of the present description and the claims, may refer to an arrangement which is configured to control or influence an orientation of the first link relative to the second link. Furthermore, the term "linear joint", as used in the context of the present description and the claims, may refer to an arrangement in which two elements are connected to one another such that they can be linearly moved relative to one another.

When the orientation of the first link relative to the second link changes, the second axis of rotation may be displaced relative to the second link (along a circular path) causing a change in the length of the lever between the first axis of rotation of the first rotary joint and the second axis of rotation of the second rotary joint.

A distance between the first rotary joint and the second rotary joint or a distance between the second rotary joint and the third rotary joint may be adjustable. For example, the exoskeleton may comprise an electric motor or a spindle drive which is configured to adjust the distance.

The first axis of rotation of the first rotary joint, the second axis of rotation of the second rotary joint, and a third axis of rotation of the third rotary joint are parallel.

The first element may be a push rod.

The exoskeleton may further comprise an actuator which is attached to the second link. The actuator may be a pneumatic actuator and the second element may be a piston of the pneumatic actuator.

The second element may be connected to the actuator via a transmission. A transmission ratio of the transmission may be independent of the orientation of the first link relative to the second link.

The exoskeleton may further comprise a controller which is configured to control a force applied by the actuator to the second element based on a pose of a user of the exoskeleton, a movement of the first link relative to the second link, a speed of the movement, and/or an acceleration of the movement.

The exoskeleton may further comprise a sensor which is configured to determine an angle between the first link and the second link, wherein the controller is further configured to control the actuator based on the angle.

The exoskeleton may further comprise a gyroscope or an accelerometer, wherein the controller may be further configured to control the actuator based on the measurements provided by the gyroscope and/or the accelerometer.

The exoskeleton may further comprise a spring which is attached to the second link, wherein the second element is further connected to the second link by the spring.

The second element may have a magnetic portion and the exoskeleton comprises a magnet that limits a movement of the second element relative to the second link by magnetic force.

A method of adapting the exoskeleton to different usage scenarios may comprise determining that an increase in support force provided by the joint drive is required and increasing a distance between the first rotary joint and the second rotary joint during operation.

### BRIEF DESCRIPTION OF THE DRAWINGS

The foregoing aspects will be explained in more detail in the following detailed description based on exemplary embodiments, wherein reference is made to the drawings in which:
Fig. 1 shows a rotary joint and a joint drive of an exoskeleton;
Fig. 1a shows a pressure curve versus the angle of rotation;
Fig. 1b shows a support torque curve versus the joint angle;
Fig. 2 shows a modification of the joint drive shown in Fig. 1;
Fig. 2a shows a pressure curve versus the angle of rotation;
Fig. 2b shows a support torque curve versus the joint angle;
Fig. 3 shows a modification of the joint drive shown in Fig. 1;
Fig. 4 shows further elements of the joint drive shown in Fig. 1;
Fig. 5 shows a modification of the joint drive shown in Fig. 4;
Fig. 6 shows a flow chart for adapting the joint drive; and
Fig. 7 shows an exemplary exoskeleton.

In the drawings, the same or functionally similar elements are indicated by the same reference numerals.

### DETAILLED DESCRIPTION

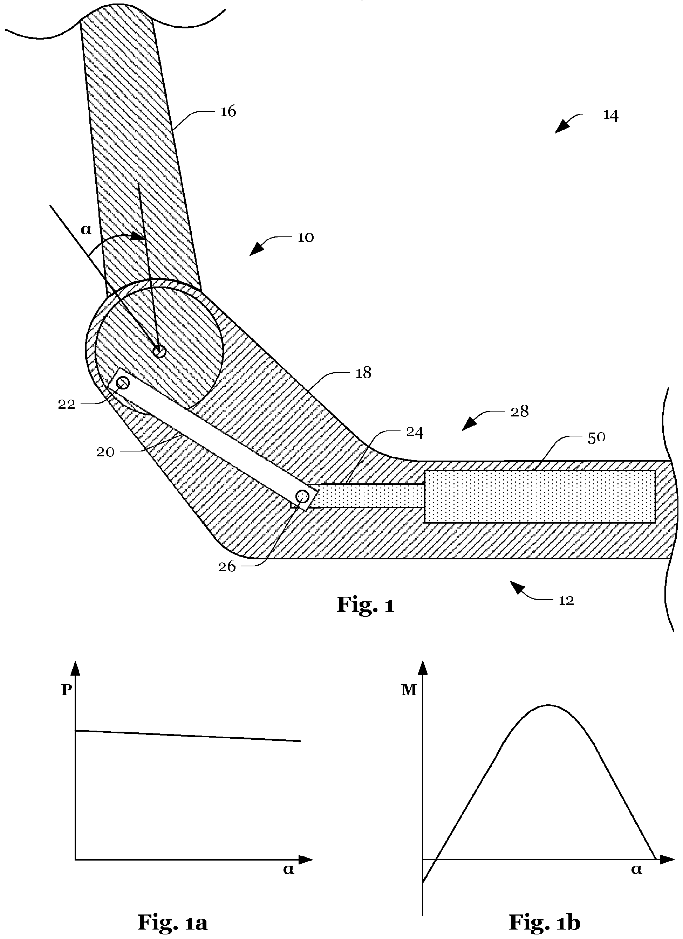

Fig. 1 shows rotary joint 10 and joint drive 12 of exoskeleton 14. Rotary joint 10 connects link 16 and link 18 which can be rotated relative to each other about a common axis of rotation. Link 18 is an angled rigid body which may be connected to a shoulder of a user. Link 16 is an elongated rigid body which may be used to support a movement of an upper arm of the user.

Joint drive 12 comprises element 20 which is designed as a push rod and is connected to link 16 by rotary joint 22. Joint drive 12 further comprises element 24 which is connected to element 20 by rotary joint 26. The axis of rotation of rotary joint 10, the axis of rotation of rotary joint 22, and the axis of rotation of rotary joint 26 are parallel and a center of rotation of rotary joint 22 moves relative to a center of rotation of rotary joint 10 on a circular path when the relative orientation between link 16 and link 18 changes.

Element 24 is connected to element 18 by linear joint 28. Moreover, element 24 serves as a piston of pneumatic actuator 50 attached to link 18. Fig. 1a illustrates the pressure P in pneumatic actuator 50 as a function of the orientation of link 16 and link 18 relative to one another. Fig. 1b illustrates the support torque M as a function of the orientation of link 16 and link 18 relative to one another.

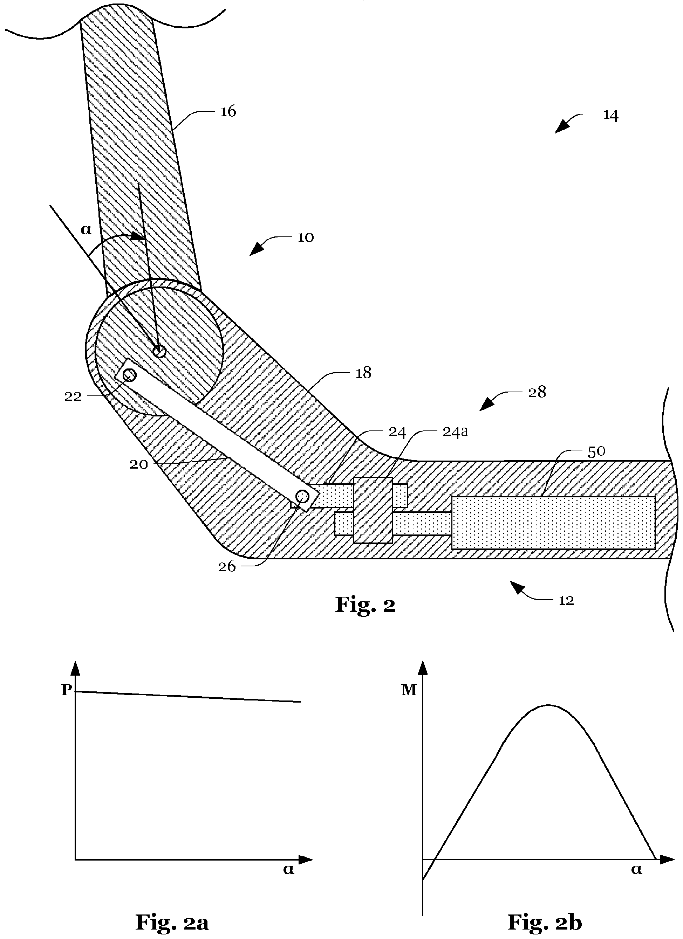

As illustrated in Fig. 2, Fig. 2a and Fig. 2c, support torque M may be adjusted (continuously) by changing the distance of the center of rotation of rotary joint 10 and the center of rotation of rotary joint 22. In addition, the zero crossing of the support torque M may be adjusted to a value α1 that is particularly suitable for the respective application scenario, by suitable dimensioning of element 20 and element 24. Furthermore, as shown in Fig. 2, element 24 may be connected to element 20 by transmission 24a (e.g., a gear transmission).

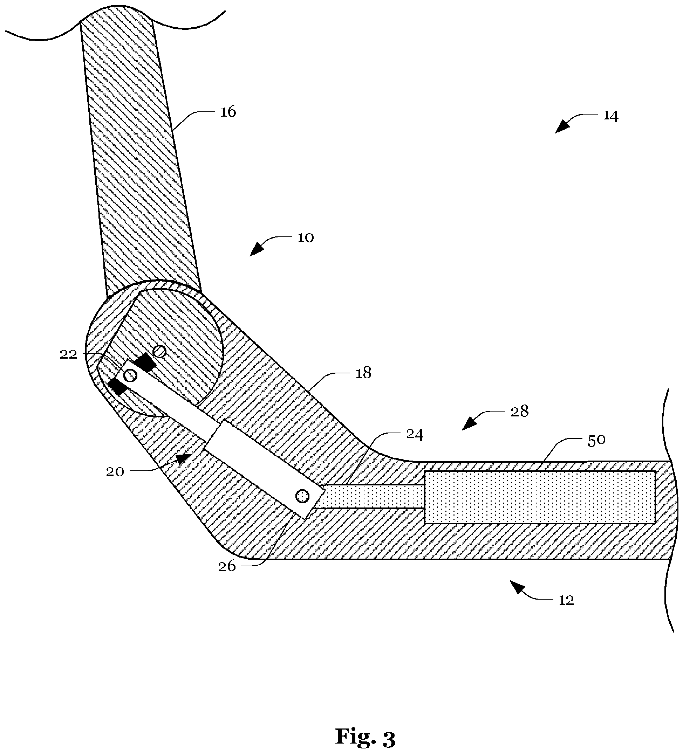

Fig. 3 shows a possible modification of the arrangements described above with reference to Fig. 1, Fig. 1a, Fig. 1b, Fig. 2, Fig. 2a and Fig. 2b. The modification allows for a (stepless) adjustment of the distance between the center of rotation of rotary joint 10 and the center of rotation of rotary joint 22 during operation (e.g., by means of an electric motor, spindle drive, etc.). Furthermore, the arrangement shown in Fig. 3 allows for a (stepless) adjustment of the length of element 20 (e.g., by means of an electric motor, spindle drive, etc.).

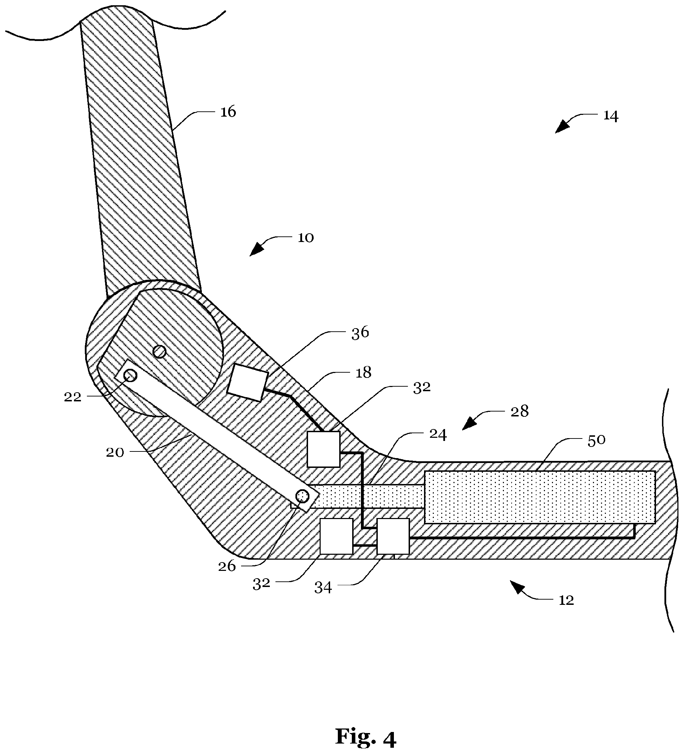

Fig. 4 shows a possible modification of the arrangements described above with reference to Fig. 1, Fig. 1a, Fig. 1b, Fig. 2, Fig. 2a, Fig. 2b and Fig. 3. The arrangement shown in Fig. 4 additionally comprises compressed air reservoir 30 and controller 32, wherein controller 32 is configured to supply or withdraw compressed air to/from pneumatic actuator 50 via a valve 34 controlled by controller 32, depending on a movement of link 16 relative to link 18, a pose that a user of the exoskeleton 14 assumes or an angular velocity or an angular acceleration.

To detect the pose, the arrangement shown in Fig. 4 comprises a sensor unit 36 with an angle of rotation sensor which is configured to determine a relative angle between link 16 and link 18. Controller 32 may be configured to supply or withdraw compressed air to/from pneumatic actuator 50 depending on the relative angle. Sensor unit 36 may further comprise a gyroscope and/or an accelerometer. The measurement of the gyroscope and/or the acceleration sensor may also be taken into account when supplying or withdrawing compressed air to/from pneumatic actuator 50.

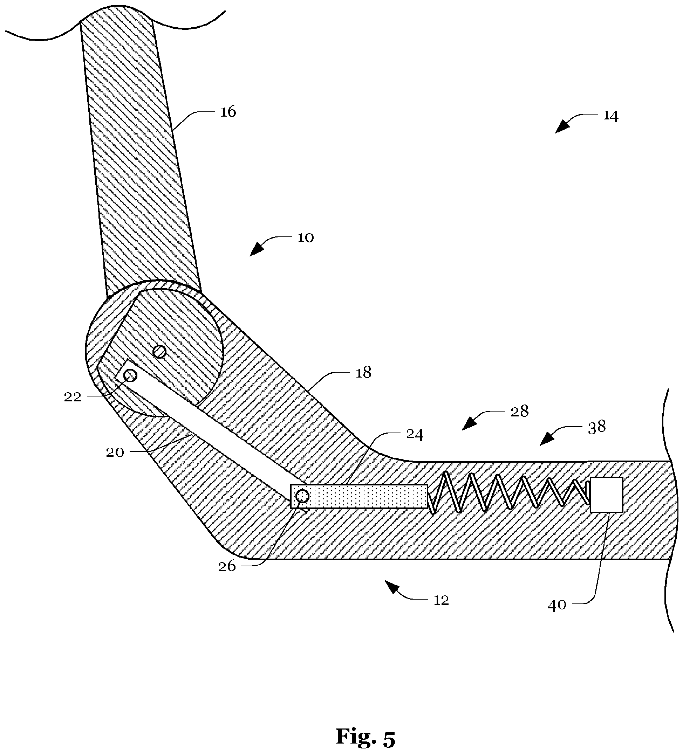

As shown in Fig. 5, element 24 may be connected to link 18 by spring 38. Alternatively or additionally, element 24 may have a magnetic section and exoskeleton 14 may comprise magnet 40 which limits a movement of element 24 relative to link 18 by means of magnetic force 12.

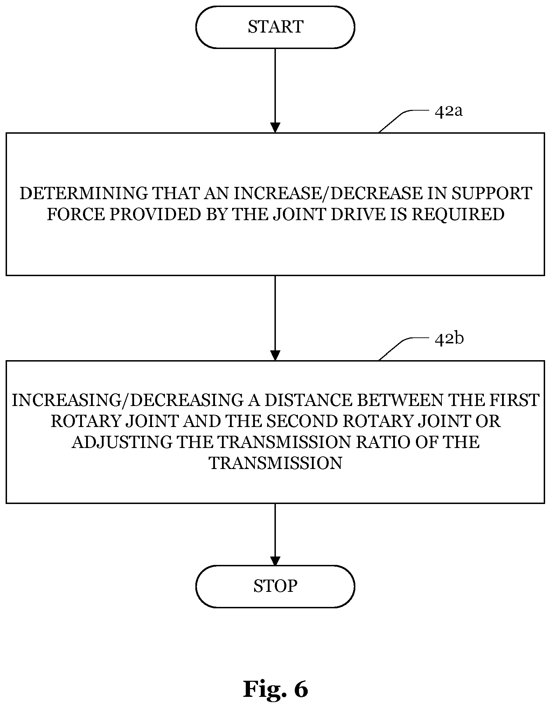

Fig. 6 shows steps 42a and 42b for adapting joint drive 12, comprising determining that an increase/decrease in support force provided by joint drive 12 is required and adjusting the distance between the center of rotation of rotary joint 10 and the center of rotation of rotary joint 22 or changing the transmission ratio of transmission 24a.

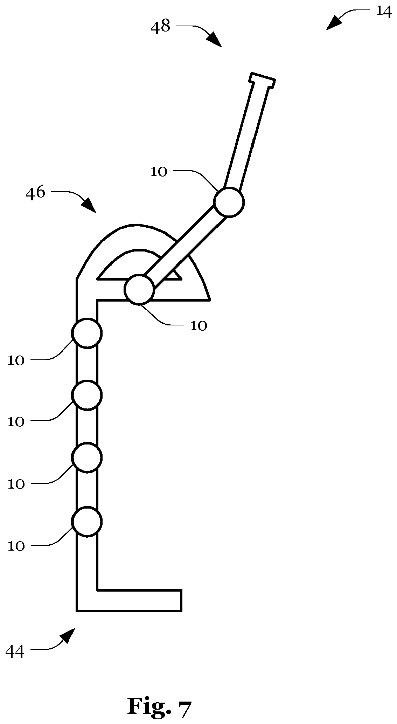

Fig. 7 shows an exoskeleton 14 with a plurality of rotary joints 10. Exoskeleton 14 comprises pelvis connector 44 (for example a pelvic belt), shoulder connector 46 (for example a shoulder belt) and arm connector 48 (for example an arm belt). One, two or more rotary joints 10 may be provided with one of the joint drives 12 described above.

### LIST OF REFERENCE SIGNS

- 10: rotary joint
- 12: joint drive
- 14: exoskeleton
- 16: link
- 18: link
- 20: element
- 22: rotary joint
- 24: element
- 24a: transmission
- 26: rotary joint
- 28: linear joint
- 30: compressed air reservoir
- 32: controller
- 34: valve
- 36: sensor unit
- 38: spring
- 40: magnet
- 42a: step
- 42b: step
- 44: pelvis connector
- 46: shoulder connector
- 48: arm connector
- 50: actuator

## Claims

1. An exoskeleton (14), comprising:
a first link (16) and a second link (18), wherein the first link (16) and the second link (18) are rotatable relative to each other about a first axis of rotation, thereby forming a first rotary joint (10) of the exoskeleton (14); and
a joint drive (12) with a first element (20) and a second element (24);
wherein the first link (16) is an elongated rigid body;
wherein the first element (20) is connected to the first link (16) by a second rotary joint (22);
wherein the second element (24) is connected to the second link (18) by a linear joint (28); and
wherein the second element (24) is connected to the first element (20) by a third rotary joint (26);
**characterized in that**
the first link (16) is an upper arm link and the second link (18) is a shoulder link; and
the second link (18) is an angled rigid body.

2. The exoskeleton (14) of claim 1, wherein the elongated rigid body is configured to support a movement of an upper arm of a user and /or the angled rigid body is configured to be connected to a shoulder of the user.

3. The exoskeleton (14) of claim 1 or 2, wherein a second axis of rotation of the second rotary joint (22) is displaced relative to the second link (18) along a circular path when the orientation of the first link (16) relative to the second link (18) changes.

4. The exoskeleton (14) of any one of claims 1 to 3, wherein a length of a lever between the first axis of rotation of the first rotary joint (10) and the second axis of rotation of the second rotary joint (22) changes when the orientation of the first link (16) relative to the second link (18) changes.

5. The exoskeleton (14) of any one of claims 1 to 4, wherein a first distance between the first rotary joint (10) and the second rotary joint (22) and/or a second distance between the second rotary joint (22) and the third rotary joint (26) are/is adjustable.

6. The exoskeleton (14) of claim 5, further comprising:
one of an electric motor and a spindle drive which is configured to adjust the first distance or the second distance.

7. The exoskeleton (14) of any one of claims 1 to 6, wherein the first axis of rotation of the first rotary joint (10), the second axis of rotation of the second rotary joint (22) and a third axis of rotation of the third rotary joint (26) are parallel.

8. The exoskeleton (14) of any one of claims 1 to 7, wherein the first element (20) is a push rod.

9. The exoskeleton (14) of any one of claims 1 to 8, further comprising:
an actuator (50) which is attached to the second link (18).

10. The exoskeleton (14) of claim 9, wherein the actuator (50) is a pneumatic actuator and the second element (24) is a piston of the pneumatic actuator.

11. The exoskeleton (14) of claim 9, wherein the second element (24) is connected to the actuator (50) via a transmission (24a), wherein a transmission ratio of the transmission (24a) is preferably independent of the orientation of the first link (16) relative to the second link (18).

12. The exoskeleton (14) of any one of claims 9 to 11, further comprising:
a controller (32) which is configured to control a force applied by the actuator (50) to the second element (24) based on at least one of a pose of a user of the exoskeleton (14), a movement of the first link (16) relative to the second link (18), a speed of the movement, and an acceleration of the movement.

13. The exoskeleton (14) of claim 12, further comprising:
a sensor which is configured to determine an angle between the first link (16) and the second link (18), wherein the controller (32) is further configured to control the actuator (50) based on the angle; and/or
at least one of a gyroscope and an accelerometer, wherein the controller (32) is further configured to control the actuator (50) based on measurements provided by at least one of the gyroscope and the accelerometer.

14. The exoskeleton (14) of any one of claims 1 to 13, further comprising:
a spring (38) which is attached to the second link (18), wherein the second element (24) is further connected to the second link (18) by the spring (38); and/or
wherein the second element (24) has a magnetic portion and the exoskeleton (14) comprises a magnet (40) that limits a movement of the second element (24) relative to the second link (18) by magnetic force.

15. A method of adapting an exoskeleton (14) according to any one of claims 1 to 14 to different usage scenarios, comprising:
determining (42a) that an increase in support force provided by the joint drive (12) is required; and
increasing (42b) a distance between the first rotary joint (10) and the second rotary joint (22) during operation.

## Patentansprüche

1. Exoskelett (14), umfassend:
ein erstes Glied (16) und ein zweites Glied (18), wobei das erste Glied (16) und das zweite Glied (18) relativ zueinander um eine erste Drehachse drehbar sind, wodurch ein erstes Drehgelenk (10) des Exoskeletts (14) gebildet wird; und
einen Gelenkantrieb (12) mit einem ersten Element (20) und einem zweiten Element (24);
wobei das erste Glied (16) ein länglicher starrer Körper ist;
wobei das erste Element (20) durch ein zweites Drehgelenk (22) mit dem ersten Glied (16) verbunden ist;
wobei das zweite Element (24) durch ein lineares Gelenk (28) mit dem zweiten Glied (18) verbunden ist; und
wobei das zweite Element (24) durch ein drittes Drehgelenk (26) mit dem ersten Element (20) verbunden ist;
**dadurch gekennzeichnet, dass**
das erste Glied (16) ein Oberarmglied ist und das zweite Glied (18) ein Schulterglied ist; und
das zweite Glied (18) ein abgewinkelter starrer Körper ist.

2. Exoskelett (14) nach Anspruch 1, wobei der längliche starre Körper so konfiguriert ist, dass er eine Bewegung eines Oberarms eines Benutzers unterstützt und/oder der abgewinkelte starre Körper so konfiguriert ist, dass er mit einer Schulter des Benutzers verbunden ist.

3. Exoskelett (14) nach Anspruch 1 oder 2, wobei eine zweite Drehachse des zweiten Drehgelenks (22) relativ zu dem zweiten Glied (18) entlang einer kreisförmigen Bahn verschoben wird, wenn sich die Ausrichtung des ersten Glieds (16) relativ zu dem zweiten Glied (18) ändert.

4. Exoskelett (14) nach einem der Ansprüche 1 bis 3, wobei sich eine Länge eines Hebels zwischen der ersten Drehachse des ersten Drehgelenks (10) und der zweiten Drehachse des zweiten Drehgelenks (22) ändert, wenn sich die Ausrichtung des ersten Glieds (16) relativ zu dem zweiten Glied (18) ändert.

5. Exoskelett (14) nach einem der Ansprüche 1 bis 4, wobei ein erster Abstand zwischen dem ersten Drehgelenk (10) und dem zweiten Drehgelenk (22) und/oder ein zweiter Abstand zwischen dem zweiten Drehgelenk (22) und dem dritten Drehgelenk (26) einstellbar sind.

6. Exoskelett (14) nach Anspruch 5, weiter umfassend:
entweder einen Elektromotor oder einen Spindelantrieb, der dazu konfiguriert ist, den ersten Abstand oder den zweiten Abstand einzustellen.

7. Exoskelett (14) nach einem der Ansprüche 1 bis 6, wobei die erste Drehachse des ersten Drehgelenks (10), die zweite Drehachse des zweiten Drehgelenks (22) und eine dritte Drehachse des dritten Drehgelenks (26) parallel sind.

8. Exoskelett (14) nach einem der Ansprüche 1 bis 7, wobei das erste Element (20) eine Schubstange ist.

9. Exoskelett (14) nach einem der Ansprüche 1 bis 8, weiter umfassend:
einen Aktuator (50), der an dem zweiten Glied (18) befestigt ist.

10. Exoskelett (14) nach Anspruch 9, wobei der Aktuator (50) ein pneumatischer Aktuator ist und das zweite Element (24) ein Kolben des pneumatischen Aktuators ist.

11. Exoskelett (14) nach Anspruch 9, wobei das zweite Element (24) über ein Getriebe (24a) mit dem Aktuator (50) verbunden ist, wobei ein Übersetzungsverhältnis des Getriebes (24a) bevorzugt von der Ausrichtung des ersten Glieds (16) relativ zu dem zweiten Glied (18) unabhängig ist.

12. Exoskelett (14) nach einem der Ansprüche 9 bis 11, weiter umfassend:
eine Steuereinheit (32), die so konfiguriert ist, dass sie eine vom Aktuator (50) auf das zweite Element (24) ausgeübte Kraft basierend auf mindestens einem von einer Haltung eines Benutzers des Exoskeletts (14) und/oder einer Bewegung des ersten Glieds (16) relativ zu dem zweiten Glied (18), einer Geschwindigkeit der Bewegung und einer Beschleunigung der Bewegung steuert.

13. Exoskelett (14) nach Anspruch 12, weiter umfassend:
einen Sensor, der so konfiguriert ist, dass er einen Winkel zwischen dem ersten Glied (16) und dem zweiten Glied (18) bestimmt, wobei die Steuereinheit (32) weiter so konfiguriert ist, dass sie den Aktuator (50) basierend auf dem Winkel steuert; und/oder
mindestens eines von einem Gyroskop und einem Beschleunigungsmesser, wobei die Steuereinheit (32) weiter dazu konfiguriert ist, den Aktuator (50) basierend auf Messungen zu steuern, die von mindestens einem des Gyroskops und Beschleunigungsmessers bereitgestellt werden.

14. Exoskelett (14) nach einem der Ansprüche 1 bis 13, weiter umfassend:
eine Feder (38), die an dem zweiten Glied (18) befestigt ist, wobei das zweite Element (24) weiter durch die Feder (38) mit dem zweiten Glied (18) verbunden ist; und/oder
wobei das zweite Element (24) einen magnetischen Abschnitt aufweist und das Exoskelett (14) einen Magneten (40) umfasst, der eine Bewegung des zweiten Elements (24) relativ zu dem zweiten Glied (18) durch Magnetkraft begrenzt.

15. Verfahren zum Anpassen eines Exoskeletts (14) nach einem der Ansprüche 1 bis 14 an unterschiedliche Nutzungsszenarien, umfassend:
Bestimmen (42a), dass eine Erhöhung der durch den Gelenkantrieb (12) bereitgestellten Stützkraft erforderlich ist; und
Vergrößern (42b) eines Abstands zwischen dem ersten Drehgelenk (10) und dem zweiten Drehgelenk (22) während des Betriebs.

## Revendications

1. Exosquelette (14) comprenant :
une première liaison (16) et une seconde liaison (18), dans lequel la première liaison (16) et la seconde liaison (18) peuvent tourner l'une par rapport à l'autre autour d'un premier axe de rotation, ce qui permet de former une première articulation tournante (10) de l'exosquelette (14) ; et
un entraînement d'articulation (12) avec un premier élément (20) et un second élément (24) ;
dans lequel la première liaison (16) est un corps rigide allongé ;
dans lequel le premier élément (20) est relié à la première liaison (16) par une deuxième articulation tournante (22) ;
dans lequel le second élément (24) est relié à la seconde liaison (18) par une articulation linéaire (28) ; et
dans lequel le second élément (24) est relié au premier élément (20) par une troisième articulation tournante (26) ;
**caractérisé en ce que**
la première liaison (16) est une liaison de bras supérieur et la seconde liaison (18) est une liaison d'épaule ;
et
la seconde liaison (18) est un corps rigide coudé.

2. Exosquelette (14) selon la revendication 1, dans lequel le corps rigide allongé est configuré pour supporter un mouvement d'un bras supérieur d'un utilisateur et/ou le corps rigide coudé est configuré pour être relié à une épaule de l'utilisateur.

3. Exosquelette (14) selon la revendication 1 ou 2, dans lequel un deuxième axe de rotation de la deuxième articulation tournante (22) est déplacé par rapport à la seconde liaison (18) le long d'un trajet circulaire lorsque l'orientation de la première liaison (16) par rapport à la seconde liaison (18) change.

4. Exosquelette (14) selon l'une quelconque des revendications 1 à 3, dans lequel une longueur d'un levier entre le premier axe de rotation de la première articulation tournante (10) et le deuxième axe de rotation de la deuxième articulation tournante (22) change lorsque l'orientation de la première liaison (16) par rapport à la seconde liaison (18) change.

5. Exosquelette (14) selon l'une quelconque des revendications 1 à 4, dans lequel une première distance entre la première articulation tournante (10) et la deuxième articulation tournante (22) et/ou une seconde distance entre la deuxième articulation tournante (22) et la troisième articulation tournante (26) sont ajustables/est ajustable.

6. Exosquelette (14) selon la revendication 5, comprenant en outre :
l'un d'un moteur électrique et d'un entraînement de broche qui est configuré pour ajuster la première distance ou la seconde distance.

7. Exosquelette (14) selon l'une quelconque des revendications 1 à 6, dans lequel le premier axe de rotation de la première articulation tournante (10), le deuxième axe de rotation de la deuxième articulation tournante (22) et un troisième axe de rotation de la troisième articulation tournante (26) sont parallèles.

8. Exosquelette (14) selon l'une quelconque des revendications 1 à 7, dans lequel le premier élément (20) est une tige de poussée.

9. Exosquelette (14) selon l'une quelconque des revendications 1 à 8, comprenant en outre :
un actionneur (50) qui est fixé à la seconde liaison (18).

10. Exosquelette (14) selon la revendication 9, dans lequel l'actionneur (50) est un actionneur pneumatique et le second élément (24) est un piston de l'actionneur pneumatique.

11. Exosquelette (14) selon la revendication 9, dans lequel le second élément (24) est relié à l'actionneur (50) par le biais d'une transmission (24a), dans lequel un rapport de transmission de la transmission (24a) est, de préférence, indépendant de l'orientation de la première liaison (16) par rapport à la seconde liaison (18).

12. Exosquelette (14) selon l'une quelconque des revendications 9 à 11, comprenant en outre :
un dispositif de commande (32) qui est configuré pour réguler une force appliquée par l'actionneur (50) au second élément (24) sur la base d'au moins l'un d'une position d'un utilisateur de l'exosquelette (14), d'un mouvement de la première liaison (16) par rapport à la seconde liaison (18), d'une vitesse du mouvement et d'une accélération du mouvement.

13. Exosquelette (14) selon la revendication 12, comprenant en outre :
un capteur qui est configuré pour déterminer un angle entre la première liaison (16) et la seconde liaison (18), dans lequel le dispositif de commande (32) est en outre configuré pour commander l'actionneur (50) sur la base de l'angle ; et/ou
au moins l'un d'un gyroscope et d'un accéléromètre, dans lequel le dispositif de commande (32) est en outre configuré pour commander l'actionneur (50) sur la base de mesures fournies par au moins l'un du gyroscope et de l'accéléromètre.

14. Exosquelette (14) selon l'une quelconque des revendications 1 à 13, comprenant en outre :
un ressort (38) qui est fixé à la seconde liaison (18), dans lequel le second élément (24) est en outre relié à la seconde liaison (18) par le ressort (38) ; et/ou
dans lequel le second élément (24) présente une partie magnétique et l'exosquelette (14) comprend un aimant (40) qui limite un mouvement du second élément (24) par rapport à la seconde liaison (18) par une force magnétique.

15. Procédé d'adaptation d'un exosquelette (14) selon l'une quelconque des revendications 1 à 14 à différents scénarios d'utilisation, comprenant :
la détermination (42a) qu'une augmentation de la force de support fournie par l'entraînement d'articulation (12) est requise ; et
l'augmentation (42b) d'une distance entre la première articulation tournante (10) et la deuxième articulation tournante (22) pendant le fonctionnement.
